# EUROPÄISCHE PATENTSCHRIFT

(11) **EP 1 093 531 B1**
(45) Veröffentlichungstag und Bekanntmachung des Hinweises auf die Patenterteilung: **04.09.2002**
(21) Anmeldenummer: 99929308.7
(22) Anmeldetag: 23.06.1999
(51) Int. Cl.: C23C 4/06, C04B 41/71, C23F 13/14

(54) **THERMISCH GESPRITZTE KORROSIONSSCHICHT FÜR STAHLBETON UND VERFAHREN ZUR HERSTELLUNG DERSELBEN**
THERMALLY INJECTED ANTICORROSION LAYER FOR REINFORCED CONCRETE AND PRODUCTION METHOD
COUCHE ANTICORROSION PULVERISEE PAR VOIE THERMIQUE POUR BETON ARME ET PROCEDE PERMETTANT DE L'OBTENIR

(30) Priorität: 27.06.1998 DE 19828827
(43) Veröffentlichungstag der Anmeldung: 25.04.2001
(73) Patentinhaber: Grillo-Werke AG, D-47169 Duisburg (DE)
(72) Erfinder: SPRIESTERSBACH, Jochen, D-45770 Marl (DE); KNEPPER, Michael, D-45470 Mülheim a.d. Ruhr (DE); WISNIEWSKI, Jürgen, D-46487 Wesel (DE)
(74) Vertreter: Werner, Hans-Karsten, Dr.Dipl.-Chem.
(86) Internationale Anmeldenummer: EP9904352
(87) Internationale Veröffentlichungsnummer: WO00000659

(56) Entgegenhaltungen:
- EP-A- 0 568 025
- EP-A- 0 591 775
- DE-A- 3 940 199
- FR-A- 2 426 032

## Beschreibung

Gegenstand der vorliegenden Erfindung ist eine thermisch gespritzte Korrosionsschicht für Stahlbeton auf Basis von Zink sowie Verfahren zur Herstellung derselben.

Thermisch gespritzte Schichten aus Zink werden seit langem als Anoden zum Schutz von Stahlbetonbauten eingesetzt. Dabei übernimmt die thermisch gespritzte Zinkanode, die auf die Außenflächen der Bauwerken mit thermischen Spritzverfahren aufgebracht wird, die Funktion des Korrosionsschutzes der Stahlbewehrung. Diese Anode kann sowohl als galvanische Opferanode oder auch als Anode in mit Fremdstrom betriebenen Korrosionsschutzsystemen eingesetzt werden. Die Lebensdauer solcher Zinkanoden wird maßgeblich beeinflußt von der Außenkorrosion und der Erosion der Spritzschicht.

Die EP 0 305 914 A2 beschreibt ein Verfahren zum Behandeln von Walzstahl zur Erhöhung der Korrosionsbeständigkeit, wobei vorzugsweise ein Überzug von Zinkpulver aufgebracht wird. Dieser Walzstahl findet insbesondere Verwendung in Betonstahl oder Spannstahl. Hierbei wird der Walzstahl direkt aus der Walzhitze bei Temperaturen unter 600 °C mit dem metallischen Pulver beschichtet. Anschließend wird noch ein Überzug aus einem Kunstharz, z.B. Epoxydharz aufgetragen. Bei diesem Verfahren wird die Bewehrung direkt im Stahlbeton vor einem Korrosionsangriff geschützt.

Die EP 0 668 364 A1 beschreibt Aluminium-Zink Legierungen zum kathodischen Schutz von Stahlbeton mit Zinkgehalten von 10 % bis 50 %. Nachteilhaft an diesen Aluminium-Zink Legierungen ist ihre geringe Beständigkeit bei höheren pH-Werten des Betons zwischen 11 und 14. Hierbei setzt eine starke Unterkorrosion der Beschichtung ein, die zum Abplatzen der Beschichtung führen kann. Reine Zinkschichten zeigen dieses Verhalten nicht und sind damit für den direkten Kontakt mit der Betonoberfläche besser geeignet.

Die JP 0831159 A beschreibt eine Aluminium-Legierung zum Korrosionsschutz von Stahlbeton mit einem Zinkgehalt von 2-7 %.

Die JP 08199279 A beschreibt eine Legierung zum Korrosionsschutz von Stahlbeton mit einem Zinkanteil von 7-50 %.

Die EP 0 591 775 A1 beschreibt ein Verfahren, bei dem die Betonoberfläche zuerst eine rauhe Epoxyd-Polyamid Primer- Schicht aufgetragen wird. Auf diese Primer-Schicht wird dann eine Aluminiumlegierung oder eine Zink-Aluminium-Pseudolegierung aufgespritzt, die mit Fremdstrom betrieben wird.

Die JP 6-2174 A beschreibt ein Verfahren, bei dem ebenfalls eine rauhe Primer-Schicht auf die Betonoberfläche aufgetragen wird. Anschließend wird Aluminium oder eine Aluminium-Legierung aufgespritzt. Zusätzlich wird auf diese Schicht noch Zink, eine Zink-Legierung oder Zink-Pseudolegierung aufgetragen. In beiden Verfahren ist die Primer-Schicht notwendig, da ein direkter Kontakt von Aluminium- oder Aluminium-Zink-Legierungen mit der Betonoberfläche vermieden werden soll.

Es ist somit bekannt, daß die Korrosionsbeständigkeit von thermisch gespritzten Zinkschichten dadurch verbessert werden kann, daß man dem Zinkdraht Aluminium zulegiert, wobei der Aluminiumgehalt zwischen 2 und 33, vorzugsweise zwischen 15 bis 22% liegen sollte. Dies gilt insbesondere dann, wenn Zinkschichten einer chloridhaltigen oder feuchten Atmosphäre ausgesetzt werden sollen, vergl. DE 198 11 447 A1.

Diese Zink/Aluminium-Legierungen lassen sich thermisch in gleicher weise auf Stahlbetonoberflächen aufbringen, wie Schichten aus reinem Zink. Bedingt durch den hohen pH-Wert des Betons zwischen 11 und 14 kommt es aber bei derartigen Schichten aus Zink/Aluminium-Legierungen zu der oben erwähnten Unterkorrosion, insbesondere der aluminiumreichen Zonen. Die dabei entstehenden Korrosionsprodukte neigen dazu, sich auszudehnen und Blasen zu bilden.

Hierdurch kommt es zu örtlichen mechanischen Schwächungen und sogar zu örtlichen Verlusten des Kontaktes zwischen dem Betonelektrolyt und der Betonoberfläche.

Die Erfindung hat sich die Aufgabe gestellt, einerseits die besseren Korrosionsbeständigkeit von Zink/Aluminium-Legierungen auszunutzen, andererseits die dabei beobachteten Nachteile der Unterkorrosion zu vermeiden.

Diese Aufgabe wird jetzt dadurch gelöst, daß die Schicht aus mindestens zwei Schichten besteht, von denen die erste, direkt auf den Beton aufgespritzte Schicht aus reinem Zink und die nachträglich darauf aufgespritzte zweite Schicht aus einer Zink/Aluminium-Legierung besteht.

Diese zweite Schicht enthält 4 bis 33 Gew.-%, vorzugsweise 15 bis 22 Gew.-% Aluminium. Die Eigenschaften können darüber hinaus noch verbessert werden, wenn dieser Zink/Aluminium-Legierung 0,002 bis 0,04 Gew.-% Indium zulegiert werden. Optimale Ergebnisse werden erzielt, wenn auf die zweite Schicht noch eine dritte Schicht auf Polyurethanbasis aufgebracht wird, die in der Lage ist, zumindest die Poren der zweiten Schicht zu verschließen.

Die erste, direkt auf den Beton aufgespritzte Schicht weist im allgemeinen eine Schichtstärke von 100 bis 400 µm auf. Auf diese Oberfläche wird dann anschließend beispielsweise mit Hilfe des Drahtlichtbogens oder Drahtflammspritzverfahrens eine Spritzschicht aus der Zink/Aluminium-Legierung aufgetragen, die wiederum im allgemeinen eine Schichtdicke von 100 bis 400 µm aufweist.

Wird auf diese zweite Schicht eine dünnflüssige Polyurethanschicht aufgetragen, die zumindest die offenen Poren verschließt, entsteht eine zusätzliche Schichtdicke von 50 bis 100 µm.

Für das Auftragen der zweiten Schicht geeigneter Draht ist beispielsweise beschrieben in der deutschen Patentanmeldung 198 11 447.8.

Ein besonders geeignetes einkomponentiges luftfeuchtigkeitshärtendes Polyürethanharz und seine Anwendung sind beispielsweise beschrieben in der EP-A-0 677 592.

## Patentansprüche

1. Thermisch gespritzte Korrosionsschicht für Stahlbeton auf Basis von Zink, **dadurch gekennzeichnet, daß** die Schicht aus mindestens zwei Schichten besteht, von denen die erste, direkt auf den Beton aufgespritzte Schicht aus reinem Zink und die nachträglich darauf aufgespritzte zweite Schicht aus einer Zink/Aluminium-Legierung besteht.

2. Thermisch gespritzte Korrosionsschicht gemäß Anspruch 1, **dadurch gekennzeichnet, daß** die Zink/Aluminium-Legierung 4 bis 33 Gew.-%, vorzugsweise 15 bis 22 Gew.-% Aluminium enthält.

3. Thermisch gespritzte Korrosionsschicht gemäß Anspruch 1 oder 2, **dadurch gekennzeichnet, daß** die Zink/Aluminium-Legierung 0,002 bis 0,04 Gew.-% Indium enthält.

4. Thermisch gespritzte Korrosionsschicht für Stahlbeton gemäß einem der Ansprüche 1 bis 3, **dadurch gekennzeichnet, daß** eine dritte Schicht auf Polyurethanbasis vorhanden ist, welche zumindest die Poren der zweiten Schicht verschließt.

5. Verfahren zum Auftragen einer Korrosionsschicht für Stahlbeton auf Basis von Zink, **dadurch gekennzeichnet, daß** zunächst eine erste Schicht aus reinem Zink aufgespritzt und danach eine zweite Schicht aus einer Zink/Aluminium-Legierung aufgespritzt wird.

6. Verfahren gemäß Anspruch 5, **dadurch gekennzeichnet, daß** die zweite Schicht 4 bis 33 Gew.-%, vorzugsweise 15 bis 22 Gew.-% Aluminium enthält.

7. Verfahren gemäß Anspruch 5 oder 6, **dadurch gekennzeichnet, daß** die Zink/Aluminium-Legierung 0,002 bis 0,04 Gew.-% Indium enthält.

8. Verfahren gemäß einem der Ansprüche 5 bis 7, **dadurch gekennzeichnet, daß** anschließend die Poren der zweiten Schicht verschlossen werden mit einer Schicht auf Polyurethanbasis.

## Claims

1. A thermally sprayed zinc-based anti-corrosion layer for reinforced concrete, **characterized in that** said layer consists of at least two layers, of which the first layer, directly sprayed on the concrete, is made of pure zinc and the second layer sprayed thereon later is made of a zinc/aluminum alloy.

2. The thermally sprayed anti-corrosion layer according to claim 1, **characterized in that** said zinc/aluminum alloy contains from 4 to 33% by weight, preferably from 15 to 22% by weight, of aluminum.

3. The thermally sprayed anti-corrosion layer according to claim 1 or 2, **characterized in that** said zinc/aluminum alloy contains from 0.002 to 0.04% by weight of indium.

4. The thermally sprayed anti-corrosion layer for reinforced concrete according to any of claims 1 to 3, **characterized in that** a third layer based on polyurethane which at least closes the pores of the second layer is present.

5. A method for applying a zinc-based anti-corrosion layer for reinforced concrete, **characterized in that** a first layer of pure zinc is first sprayed onto the concrete, followed by spraying a second layer of a zinc/aluminum alloy.

6. The method according to claim 5, **characterized in that** the second layer contains from 4 to 33% by weight, preferably from 15 to 22% by weight, of aluminum.

7. The method according to claim 5 or 6, **characterized in that** said zinc/aluminum alloy contains from 0.002 to 0.04% by weight of indium.

8. The method according to any of claims 5 to 7, **characterized in that** the pores of the second layer are subsequently closed by a layer based on polyurethane.

## Revendications

1. Couche de protection contre la corrosion, projetée thermiquement pour du béton armé, à base de zinc, **caractérisée en ce que** la couche est formée d'au moins deux couches, dont la première couche, appliquée directement sur le béton par pulvérisation, est formée de zinc pur et la deuxième couche subséquente, pulvérisée dessus, est formée d'un alliage zinc/aluminium.

2. Couche de protection contre la corrosion projetée thermiquement, selon la revendication 1, **caractérisée en ce que** l'alliage zinc/aluminium contient de 4 à 33 % en poids, de préférence de 15 à 22 % en poids d'aluminium.

3. Couche de protection contre la corrosion projetée thermiquement, selon la revendication 1 ou 2, **caractérisée en ce que** l'alliage zinc/aluminium contient de 0,002 à 0,04 % en poids d'indium.

4. Couche de protection contre la corrosion projetée thermiquement, pour du béton armé, selon l'une des revendications 1 à 3, **caractérisée en ce qu'**une troisième couche à base de polyuréthanne est prévue, fermant au moins les pores de la deuxième couche.

5. Procédé d'application d'une couche de protection contre la corrosion pour du béton armé, à base de zinc, **caractérisé en ce que**, d'abord, une première couche en zinc pur est appliquée par pulvérisation, puis une deuxième couche en zinc/aluminium est appliquée par pulvérisation.

6. Procédé selon la revendication 5, **caractérisé en ce que** la deuxième couche contient de 4 à 33 %, de préférence de 15 à 22 % en poids d'aluminium.

7. Procédé selon la revendication 5 ou 6, **caractérisé en ce que** l'alliage en zinc/aluminium contient de 0,002 à 0,04 % en poids d'indium.

8. Procédé selon l'une des revendications 5 à 7, **caractérisé en ce que**, ensuite, les pores de la deuxième couche sont fermés avec une couche à base de polyuréthanne.
